# EUROPEAN PATENT APPLICATION

(11) **EP 4 825 665 A1**
(43) Date of publication of application: **21.10.2026**
(21) Application number: 25170488.8
(22) Date of filing: 14.04.2025
(51) Int. Cl.: B60R 16/02, B60R 16/027

(54) **CABLE HOLDER FOR ATTACHING AT LEAST ONE HIGH-VOLTAGE CABLE TO A VEHICLE STRUCTURE, AND METHOD FOR ATTACHING AT LEAST ONE HIGH-VOLTAGE CABLE TO A VEHICLE STRUCTURE**

(71) Applicant: Volvo Car Corporation, 405 31 Göteborg (SE)
(72) Inventor: SETH, Ankur, 40531 Göteborg (SE); KIRDIS, Bayram Ali, 40531 Göteborg (SE); LANNÖ, Jonas, 40531 Göteborg (SE); SELHAMMER, Ulf, 40531 Göteborg (SE); SVENSSON, Jörgen, 40531 Göteborg (SE); LIENG, Phu, 40531 Göteborg (SE); NILSSON, Edvin, 40531 Göteborg (SE)
(74) Representative: Kransell & Wennborg KB

(57) **Abstract**

The disclosure relates to a cable holder (26) for attaching at least one high-voltage cable (20) to a vehicle structure. The cable holder (26) comprises a base part (28) fixable to the vehicle structure, and a sled (40) comprising an attachment interface (54) for attaching the at least one high-voltage cable (20). The base part (28) and the sled (40) are movably coupled via a first guide such that the sled (40) and the base part (28) are translatorily movable relative to one another. The disclosure also relates to a method for attaching at least one high-voltage cable (20) to a vehicle structure using a cable holder (26).

## Description

### TECHNICAL FIELD

The present disclosure relates to a cable holder for attaching at least one high-voltage cable to a vehicle structure.

Moreover, the present disclosure is directed to a method for attaching at least one high-voltage cable to a vehicle structure.

### BACKGROUND ART

In vehicles, particularly in a drivetrain of an electric vehicle, high-voltage cables may be used to provide electric power from a traction battery of the vehicle to an electric motor that drives a road wheel of the vehicle. The traction battery may be affixed to a vehicle structure, more specifically to a body of the vehicle. The electric motor may be coupled to the road wheel of the vehicle that is to be driven by the electric motor.

Since the vehicle, and, thus, also the high-voltage cable, may be subject to vibrations during operation of the vehicle, it is necessary to reliably fix the high-voltage cable to the vehicle structure and/or components of the drivetrain. Moreover, high-voltage cables need to be positioned in a precise manner in order to allow for electromagnetic compatibility. However, due to the fact that high-voltage cables often comprise materials of comparatively high mechanical stiffness, the precise and reliable attachment of the high-voltage cable may require comparatively high assembly forces. Thus, precise and reliable attachment of the high-voltage cable and easy assembly are at least partially conflicting objectives.

### SUMMARY

It is therefore an objective of the present disclosure to mitigate or solve this conflict of objectives. This means that a solution shall be provided which allows both for easy assembly of a high-voltage cable and, at the same time, ensures reliable and precise attachment of the high-voltage cable.

The problem is at least partially solved or alleviated by the subject matter of the independent claims of the present disclosure, wherein further examples are incorporated in the dependent claims.

According to a first aspect, there is provided a cable holder for attaching at least one high-voltage cable to a vehicle structure. The cable holder comprises a base part fixable to the vehicle structure and a sled comprising an attachment interface for attaching the at least one high-voltage cable. The base part and the sled are movably coupled via a first guide such that the sled and the base part are translatorily movable relative to one another.

The base part being fixable to the vehicle structure may be understood in that the base part comprises a fixing interface for fixing the base part to the vehicle structure. The base part may be fixable to the vehicle structure by welding, by adhesive bonding, by bolts, by rivets or by any other suitable fixing technique. The attachment interface of the sled may comprise at least one clamp that may clamp the at least one high-voltage cable to the sled and/or at least one hole for attaching at least one cable tie to the attachment interface that may hold the at least one high-voltage cable. The first guide allows a translatory movement between the sled and the base part. To this end, the first guide may, for example, comprise a T-shape or an L-shape in a cross section. Thus, when the base part is fixed to the vehicle structure, the sled is still movable relative to the vehicle structure. The translatory movement between the sled and the base part may comprise a linear movement of the sled relative to the base part. Thus, the first guide may be a linear guide. However, the translatory movement may also comprise a movement of the sled relative to the base part along a curved track. In this case, the first guide may comprise a shape corresponding to the curved track. In any case, the translatory movement between the sled and the base part means that the movement is not restricted to a purely rotatory movement of the sled relative to the base part. The sled being translatorily movable relative to the base part has the effect that at least a portion of the high-voltage cable attachable to the attachment interface of the base part may be moved relative to the vehicle structure. In particular, at least a portion of the high-voltage cable may be moved towards a component of the electric drivetrain, e.g. the electric motor. Thus, using the cable holder, the high-voltage cable may be attached to the vehicle structure or to a component of the drivetrain while the high-voltage cable is comparatively relaxed, i.e. easily movable. Thereafter, by moving the base part and the sled relative to another, the high-voltage cable may be moved into its final position and/or tensioned. Thus, easy assembly is combined with a reliable and precise attachment.

It is noted that even though the cable holder according to the present disclosure is primarily suitable for attaching at least one high-voltage cable to the vehicle structure, this does not exclude that additionally or alternatively a hydraulic and/or a pneumatic hose may be attached to the vehicle structure by means of the cable holder.

In the context of the present disclosure, the vehicle structure may for example be part of a body of the vehicle, a subframe of the vehicle and/or an axle carrier of a vehicle. In particular, a road wheel of the vehicle may move relative to the vehicle structure while driving, e.g. due to a springy movement of the road wheel, which may be allowed by a suspension of the road wheel, or a steering movement of the road wheel relative to the vehicle structure.

In the context of the present disclosure, the high-voltage cable may be usable for connecting any two components of an electric drivetrain, wherein the any two components may be selected from a traction battery, an electric machine, and an inverter unit.

In an example, the base part comprises a plate-shaped portion. Also the sled comprises a plate-shaped portion. The first guide movably couples the plate-shaped portion of the base part and the plate-shaped portion of the sled. A plate-shaped portion may be understood as a portion that extends predominantly along a plane, i.e. along a geometric entity without significant curvature. The plate-shaped portion of the base part being coupled to the plate-shaped portion of the sled may be understood in that the base part and the sled contact each other at their respective plate-shaped portions, i.e. at least in a two-dimensional manner, while being moved relative to one another. This has the effect that the sled does not tilt relative to the base part around an axis defined by a direction of movement of the sled relative to the base part. This ensures a constant and stable orientation of the sled and, thus, also of the at least one high-voltage cable attachable to the sled relative to the base part when the sled is being moved relative to the base part. If the base part is attached to the vehicle structure, this also ensures a constant and stable orientation of at least a portion of the high-voltage cable that is attached to the sled at the attachment interface to the vehicle structure.

In an example, the cable holder further comprises an actuation mechanism for actuating the translatory movement of the base part and the sled relative to one another. Actuating the translatory movement of the base part relative to the sled may be understood as forcing the sled to move relative to the base part. To this end, the actuation mechanism may be coupled to both the sled and the base part. The actuation mechanism may comprise a mechanical actuator, an electric actuator, a hydraulic actuator, a pneumatic actuator or any other suitable actuator or any combination of the mentioned actuators. Thus, the actuation mechanism may allow applying a force onto the sled such that it moves along the first guide relative to the base part. In particular, the force may be applied onto the sled by the actuation mechanism without significant force exertion of assembly personnel. This may be understood in that assembly personnel only needs to provide a control impulse to the actuation mechanism in order to exercise a force onto the sled. However, this may also be understood in that assembly personnel only needs to apply a limited amount of force to the actuation mechanism which may be leveraged by the actuation mechanism such that a higher force is exercised onto the sled. This has the effect that the sled may be moved relative to the base part against a comparatively high mechanical resistance even though no or only a small amount of force is applied by assembly personnel. The mechanical resistance may be provided by the at least one high-voltage cable that may need to be compressed, bent or tensioned in order to move into the desired position. Since the at least one high-voltage cable may comprise a particularly large diameter, it may be particularly stiff. Thus, providing the cable holder with the actuation mechanism may relieve assembly personnel from the task of compressing, bending or tensioning a particularly stiff high-voltage cable by means of their bare hands. In other words, using the cable holder comprising the actuation mechanism for attaching a high-voltage cable to the vehicle structure constitutes an ergonomic improvement for assembly personnel. This may be particularly relevant if a plurality of high-voltage cables need to be attached to the vehicle structure.

In an example, the actuation mechanism comprises a threaded rod coupled to at least one of the sled or the base part via a threaded hole such that the translatory movement is actuatable by rotating the threaded rod. The threaded hole being coupled to at least one of the sled or the base part may be understood in that at least one of the sled and the base part comprises the threaded hole. The threaded hole may be cut into the sled or into the base part. This may be a viable option if the component that comprises the threaded hole, i.e. the sled or the base part, comprises a comparatively strong material, e.g. a metal like steel or aluminum. Alternatively, the sled or the base part may comprise a bushing that is pressed into the sled or into the base part. The bushing may comprise a thread at its inner surface. Using a bushing may be advantageous if the component that comprises the threaded hole, i.e. the sled or the base part, comprises a comparatively weak material, e.g. a plastic material. It is understood that the bushing comprises a comparatively strong material that may withstand forces exercised onto the bushing via the threaded rod, i.e. a metal like steel or aluminum. By rotating or turning the threaded rod, a length of the threaded rod extending between the sled and the base part may be changed. The respective other component of the sled or the base part that does not comprise the threaded hole may be contacted by a component of the threaded rod, e.g. by a head of the threaded rod, or by a component mounted to the threaded rod, e.g. by a lock nut or by a self-securing nut, that does not move along a length direction of the threaded rod when the threaded rod is being rotated. This has the effect that a change in length of the threaded rod extending between the sled and the base part translates into a pushing or pulling force acting onto the sled. The pushing or pulling force may cause the sled to move translatorily relative to the base part along the first guide. A threaded rod or bolt is a reliable means to convert a rotational movement of a comparatively low torque into a translatory movement of a comparatively high pushing or pulling force. Thus, the actuation mechanism comprising a threaded rod has the effect that operating personnel only has to apply a comparatively low torque in order to move the comparatively stiff high-voltage cable into a desired position or shape.

In an example, the actuation mechanism is configured to actuate a translatory movement in one direction only. This may be referred to as a mono-directional actuation mechanism, meaning that the sled can only be actively moved, i.e. pushed or pulled, into one direction along the first guide relative to the base part using the actuation mechanism. However, it is noted that this does not exclude that the sled may be passively moved into an opposite direction by forces external to the actuation mechanism, i.e. by elastic forces that may have built up in the at least one high-voltage cable, when the actuation mechanism is loosened. A mono-directional actuation mechanism may be realized if the threaded rod only comprises one component that does not move along the length direction of the threaded rod when the threaded rod is being rotated, e.g. a head of the threaded rod. Using a mono-directional actuation mechanism may provide freedom of movement of the sled relative to the base past while attaching the at least one high-voltage cable to the vehicle structure. Alternatively, the actuation mechanism is configured to actuate a translatory movement in two opposite directions. This may be referred to as a bi-directional actuation mechanism meaning that the sled can be moved back and forth along the first guide. A bi-directional actuation mechanism may be realized if the threaded rod comprises two components that do not move along the length direction of the threaded rod when the threaded rod is being rotated, e.g. a head of the threaded rod and a lock nut screwed onto the threaded rod. In this example, the head of the threaded rod and the lock nut need to be arranged on opposite sides of that component of the cable holder, i.e. the base part or the sled, that does not comprise the threaded hole. Using a bi-directional actuation mechanism may allow a precise control of a position of the sled relative to the base past while attaching the at least one high-voltage cable to the vehicle structure.

In an example, the actuation mechanism comprises an actuation interface for operating the actuation mechanism by means of a tool. For example, the actuation interface may, for example, comprise a hexagonal head, a hexagon socket, a cross-headed screw, a slotted-head screw or like. Thus, the actuation mechanism may be operated by means of a wrench, a ratchet or a tool, in particular a pneumatic, electric, hydraulic or manual tool such as a pneumatic, electric hydraulic or manual screwdriver. Using such a tool makes it particularly easy and ergonomically comfortable for assembly personnel to actuate the actuation mechanism in order to cause the translatory movement of the sled relative to the base part.

In an example, a wall portion extends from the plate-shaped portion of the base part. Additionally, a wall portion extends from the plate-shaped portion of the sled. The actuation mechanism couples the wall portion of the base part and the wall portion of the sled. The wall portion of the base part may extend into the same direction as the wall portion of the sled. Thus, the wall portion of the base part may extend in parallel to the wall portion of the sled. The actuation mechanism coupling the wall portion of the base part and the wall portion of the sled may be understood in that upon actuating the actuation mechanism, for example by means of a tool, a pushing force may be exercised onto the wall portion of the base part and onto the wall portion of the sled causing the respective wall portions to be pushed apart from one another along the first guide. Alternatively, a tensile force may be exercised on the wall portion of the base part and onto the wall portion of the sled causing the respective wall portions to be pulled together along the first guide. For example, a threaded rod of the actuation mechanism may be screwed into the wall portion of the base part or into the wall portion of the sled. Thus, the above explained pushing force or tensile force may be exercised onto the wall portion via a thread in the wall portion or at least via a bushing comprising a thread and pressed into that wall portion. A component of the threaded rod that does not move along the length direction of the threaded rod when the threaded rod is being rotated, e.g. a head of the threaded rod or a lock nut screwed onto the threaded rod, may interact with the respective other wall portion into which the threaded rod is not screwed. This may be understood in that the above explained pushing force or tensile force may be exercised onto the respective other wall portion by the component of the threaded rod that does not move along the length direction of the threaded rod when the threaded rod is being rotated. All in all, wall portions extending from the plate-shaped base part and from the plate-shaped sled have the effect that the sled may be efficiently moved along the first guide using the actuation mechanism.

In an example, the cable holder further comprises an impeding element configured to impede a movement of the sled and the base part relative to one another. Impeding a movement of the sled relative to the base part may be understood in that a movement of the sled relative to the base part is at least made more difficult than if the impeding element was not in place. Moreover, impeding a movement of the sled relative to the base part may mean that said movement is not possible at all, in particular not without exercising destructive force. In particular, the impeding element may create an amount of frictional force or even a locking between the base part and the sled that cannot be overcome by elastic forces created in the at least one high-voltage cable when forcing it into a desired shape or position. In other words, the impeding element may cause the sled to remain in a particular, i.e. fixed, position relative to the base part even though the actuation mechanism is not being actuated. However, actuating the actuation mechanism, for example by means of a tool, may indeed overcome the frictional force or the locking created by the impeding element. This has the effect that the impeding element does not necessarily need to be loosened prior to actuating the actuation mechanism for translatorily moving the sled relative to the base part. Alternatively, the impeding element may be configured such that it does need to be loosened before actuating the actuation mechanism for translatorily moving the sled relative to the base part. This implies that the frictional force or the locking created between the sled and the base part is that strong that it cannot be overcome by actuating the actuation mechanism. Thus, the sled may be secured in a particular position, i.e. in a fixed position, relative to the base part in a highly reliable manner. Also, mistakenly actuating the actuation mechanism, i.e. mistakenly moving the sled relative to the base part, may be avoided.

In an example, the impeding element forms part of the actuation mechanism. This may mean that the impeding element is attached to or at least coupled to parts of the actuation mechanism. For example, if the actuation mechanism comprises a threaded rod, a lock nut or a self-securing nut as impeding element may be screwed onto the threaded rod. The lock nut or the self-securing nut as impeding element may further be coupled to the sled or to the base part, in particular to the wall portion extending from the sled or from the base part. This means that the lock nut or the self-securing nut may not be moved relative to the sled or to the base part, in particular the lock nut or the self-securing nut may not be turned relative to the wall portion extending from the sled or from the base part. This has the effect that the threaded rod may only be rotated or turned by applying a torque that overcomes a locking force created by the lock nut or that overcomes a frictional force created by the self-securing nut. Alternatively, the impeding element may be separate from the actuation mechanism. In this case, the impeding element may comprise a screw that is screwed into the plate-shaped portion of either the base part or the sled. The screw may contact the plate-shaped portion of the respective other component, i.e. of the sled or the base part, and create an excessive amount of frictional force or even a lock at a contact interface between the screw and the respective other component. Thus, in this alternative, the impeding element may be coupled to both the base part and the sled. This has the effect that the sled may be secured in a particular position relative to the base part even though the actuation mechanism has failed, e.g. due to aging and rust or due to a breakage caused by improper actuation of the actuation mechanism, for example due to application of a destructive torque during actuation.

In an example, the base part and the sled are movably coupled via a second guide such that the sled and the base part are translatorily movable relative to one another, wherein the first guide and the second guide extend in parallel. Like the first guide, the second guide allows a translatory movement between the sled and the base part and may comprise a T-shape or an L-shape in a cross section. The first guide and the second guide may comprise the same or a different shape. When the base part is fixed to the vehicle structure, the sled is movable relative to the vehicle structure. The translatory movement between the sled and the base part may comprise a linear movement of the sled relative to the base part. Thus, the first guide and the second guide may be linear guides. However, the translatory movement may also comprise a movement of the sled relative to the base part along a curved track. In this case, the first guide and the second guide may comprise a shape that corresponds to the curved track. In any case, the translatory movement between the sled and the base part means that the movement is not restricted to a purely rotatory movement of the sled relative to the base part. Using a first guide and a second guide that extend in parallel to each other has the effect that that a structurally sound guidance of the sled relative to the base part may be achieved. This may be of particular importance if more than one high-voltage cable shall be attached to the vehicle structure via the cable holder. A plurality of high-voltage cables may require particularly high forces to force them into a desired shape or position. As a consequence, high reaction forces at an interface between the base part and the sled may have to be supported, which may be achieved by the first guide and the second guide. To this end, even more than two guides between the base part and the sled may be used in order to distribute reaction forces over a broader area. This may be particularly beneficial if the base part and/or the sled comprise a plastic material.

In an example, the cable holder further comprises a first abutment mechanism for abutting the sled against the base part in a first relative position. Additionally or alternatively, the cable holder further comprises a second abutment mechanism for abutting the sled against the base part in a second relative position. The first relative position of the second relative position may be understood as a first end position and as a second end position of the sled relative to the base part, respectively. Thus, the first relative position and the second relative position are understood to be different from one another. The first abutment mechanism may constrain a movement of the sled relative to the base part along a first direction such that at least a portion of the sled, e.g. the wall portion extending from the plate-shaped portion of the sled, may not be translatorily moved further away from the base part than in the first relative position. The first abutment mechanism may comprise an end stop in the first guide and/or in the second guide between the sled and the base part. Additionally or alternatively, the first abutment mechanism may comprise a head of the threaded rod that couples the wall portion that extends from the plate-shaped portion of the sled to the wall portion that extends from the plate-shaped portion of the base part. In the latter case, the first abutment mechanism may further comprise an end stop on a thread of the threaded rod such that the threaded rod cannot be screwed further than a position that it assumes relative to the base part and relative to the sled when the sled is in the first relative position. The second abutment mechanism may constrain a movement of the sled relative to the base part a long a second direction such that at least a portion of the sled, e.g. the wall portion extending from the plate-shaped portion of the sled, may not be translatorily moved further towards the base part than in the second relative position. It is understood that the second direction is opposite the first direction. Also the second abutment mechanism may comprise an end stop in the first guide and/or in the second guide between the sled and the base part. Additionally or alternatively, the first abutment mechanism may comprise the wall portion extending from the plate-shaped portion of the sled and the wall portion extending from the plate-shaped portion of the base part. In simplified words, the wall portion extending from the plate-shaped portion of the sled may abut against the wall portion extending from the plate-shaped portion of the base part. The first abutment mechanism and the second abutment mechanism have the effect that the position of the sled relative to the base part may be constrained to a defined range between the first relative position and the second relative position. Thus, the sled is prevented from unintentionally loosening from the base part if the sled is moved relative to the base part, in particular if the actuation mechanism actuation mechanism is used to move the sled relative to the base part.

According to a second aspect, there is provided a method for attaching at least one high-voltage cable to a vehicle structure using a cable holder according to the first aspect. The method comprises:
- attaching the base part to the vehicle structure and attaching the high-voltage cable to the attachment interface of the sled while the sled and the base part are in a first relative position, and
- subsequently moving the sled and the base part into a second relative position.

The vehicle structure may for example be part of a body of the vehicle, a subframe of the vehicle and/or an axle carrier of a vehicle. In particular, a road wheel of the vehicle may move relative to the vehicle structure while driving, e.g. due to a springy movement or a steering movement of the road wheel relative to the vehicle structure. The high-voltage cable may electrically connect any two components of an electric drivetrain. The base part may be attached to the vehicle structure by welding, by adhesive bonding, by bolts, by rivets or by other fixing suitable technique. The sled may comprise an attachment interface to which the at least one high-voltage cable is attached. Attaching the high-voltage cable to the sled may be accomplished by closing at least one clamp that the attachment interface may comprise and/or by guiding at least one cable tie through at least one hole in the attachment interface and around the high-voltage cable and further tying the cable tie. The sled may be moved from the first relative position into the second relative position along a first guide coupling the sled translatorily movable to the base part. The first relative position may be chosen such that the high-voltage cable may be relatively easily attached to the vehicle structure using the cable holder. The second relative position may be chosen such that the high-voltage cable is in the desired position or shape if the cable holder assumes the second relative position. The first relative position and the second relative position may also be referred to as a first end position and as a second end position, respectively. Additionally, the second relative position may be designated a desired position of the sled relative to the base part. It is noted that the second relative position may be any desired position of the sled relative to the base part in which at least a portion of the sled is closer the base part than in the first relative position. In other words, a position of the sled relative to the base part may be calibrated to a desired position when moving the sled from the first relative position to the second relative position.

In an example, the method further comprises regulating a force within the high-voltage cable when moving the sled and the base part from the first relative position into the second relative position. In this context, regulating a force within the high-voltage cable is to be understood as tensioning or compressing the at least one high-voltage cable. Additionally or alternatively, regulating a force within the high voltage cable may comprise increasing or decreasing a tensile or compressive force within the high-voltage cable. It is understood that if the at least one high-voltage cable is compressed on one side of the cable holder, if may be tensioned on the respective other side of the cable holder and vice versa. Tensioning or compressing the at least one high-voltage cable may be difficult for assembly personnel to accomplish with their bare hands because the at least one high-voltage cable may have a particularly high stiffness. Thus, using a cable holder in the method for attaching the at least one high-voltage cable to the vehicle structure may ease an assembly process. In particular, using the cable holder may improve ergonomics for assembly personnel.

In an example, the method further comprises impeding a further movement of the sled relative to the base part once the sled is in the second relative position. Impeding a movement of the sled relative to the base part may be understood in that a movement of the sled relative to the base part is at least made more difficult than if the movement was not impeded. Moreover, impeding a movement of the sled relative to the base part may mean that said movement is not possible at all, in particular not without exercising destructive force. Impeding the further movement of the sled relative to the base part may be accomplished by an impeding element. The impeding element may create an amount of frictional force or even a locking between the base part and the sled that cannot be overcome by elastic forces created in the at least one high-voltage cable when tensioning or compressing it. In other words, the impeding element may cause the sled to remain in a particular position relative to the base part, i.e. in a fixed position, even though an actuation mechanism for moving the sled relative to the base part is not being actuated. In other words, the sled may be prevented from moving back into the first relative position once it has reached the second relative position. Thus, the sled may be secured in a particular position relative to the base part in a highly reliable manner. Also, mistakenly actuating the actuation mechanism, i.e. mistakenly moving the sled relative to the base part may be avoided.

In an example, the method further comprises actuating the movement of the sled and the base part in the second relative position by means of a tool. For this purpose, an actuation interface of the actuation mechanism may, for example, comprise a hexagonal head, a hexagon socket, a cross-headed screw, a slotted-head screw or like. Thus, the actuation mechanism may be operated by means of a wrench, a ratchet or a tool, in particular a pneumatic, electric, hydraulic or manual tool such as a pneumatic, electric hydraulic or manual screwdriver. Using such a tool makes it particularly easy and ergonomically comfortable for assembly personnel to actuate the actuation mechanism in order to cause the translatory movement of the sled relative to the base part.

It should be noted that the above examples may be combined with each other irrespective of the aspect involved. Accordingly, the method may be combined with structural features and, likewise, the cable holder may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a schematic of a vehicle comprising a cable holder according to the present disclosure,
- Figure 2: shows a detailed view of the cable holder of Figure 1 mounted to the vehicle, wherein a sled of the cable holder is in a first relative position to a base part of the cable holder,
- Figure 3: shows a first example of a guide of the cable holder of Figure 1 for movably coupling the sled to the base part,
- Figure 4: shows a second example of the of the cable holder of Figure 1 for movably coupling the sled to the base part,
- Figure 5: shows a third example of the guide of the cable holder of Figure 1 for movably coupling the sled to the base part,
- Figure 6: shows a first example of an actuation mechanism of the cable holder of Figure 1 with the base part and the sled in the first relative position,
- Figure 7: shows the first example of the actuation mechanism of Figure 6 with the base part and the sled in a second relative position,
- Figure 8: shows a side view of the cable holder of Figure 1 with the first example of the actuation mechanism in the first relative position,
- Figure 9: shows a sectional view through the cable holder of Figure 8 along line A-A, wherein a first example of an impeding element impedes a movement of the sled relative to the base part,
- Figure 10: shows a plan view of the cable holder of Figure 1 with the first example of the actuation mechanism in the first relative position and the first example of the impeding element,
- Figure 11: shows a plan view of the cable holder of Figure 10 in the second relative position,
- Figure 12: shows a sectional view through the cable holder of Figure 11 along line B-B in Figure 11,
- Figure 13: shows a plan view of the cable holder of Figure 1 with the first example of the actuation mechanism in the first relative position and a second example of the impeding element,
- Figure 14: shows a sectional view through the cable holder of Figure 13 along line C-C in Figure 13,
- Figure 15: shows a plan view of the cable holder of Figure 13 in the second relative position,
- Figure 16: shows a sectional view through the cable holder of Figure 15 along line D-D in Figure 15,
- Figure 17: shows a second example of an actuation mechanism of the cable holder of Figure 1 with the base part and the sled in the first relative position, wherein the second example of the actuation mechanism comprises a third example of the impeding element,
- Figure 18: shows the second example of the actuation mechanism of Figure 17 with the base part and the sled in the intermediate position,
- Figure 19: shows the second example of the actuation mechanism of Figure 17 with the base part and the sled in the second relative position,
- Figure 20: shows a plan view of the cable holder of Figure 1 with the second example of the actuation mechanism in the first relative position, wherein the second example of the actuation mechanism comprises the third example of the impeding element,
- Figure 21: shows a sectional view through the actuation mechanism of the cable holder of Figure 20 along line E-E in Figure 20,
- Figure 22: shows a plan view of the cable holder of Figure 20 in the second relative position,
- Figure 23: shows a sectional view through the actuation mechanism of the cable holder of Figure 22 along line F-F in Figure 22,
- Figure 24: shows the actuation mechanism of the cable holder of Figure 1 being actuated by means of a pneumatic screwdriver, and
- Figure 25: shows steps of a method according to the present disclosure for attaching at least one high-voltage cable to a vehicle structure using a cable holder according to the present disclosure.

### DETAILED DESCRIPTION

The Figures are merely schematic representations and serve only to illustrate examples of the disclosure. Identical or equivalent elements are in principle provided with the same reference signs.

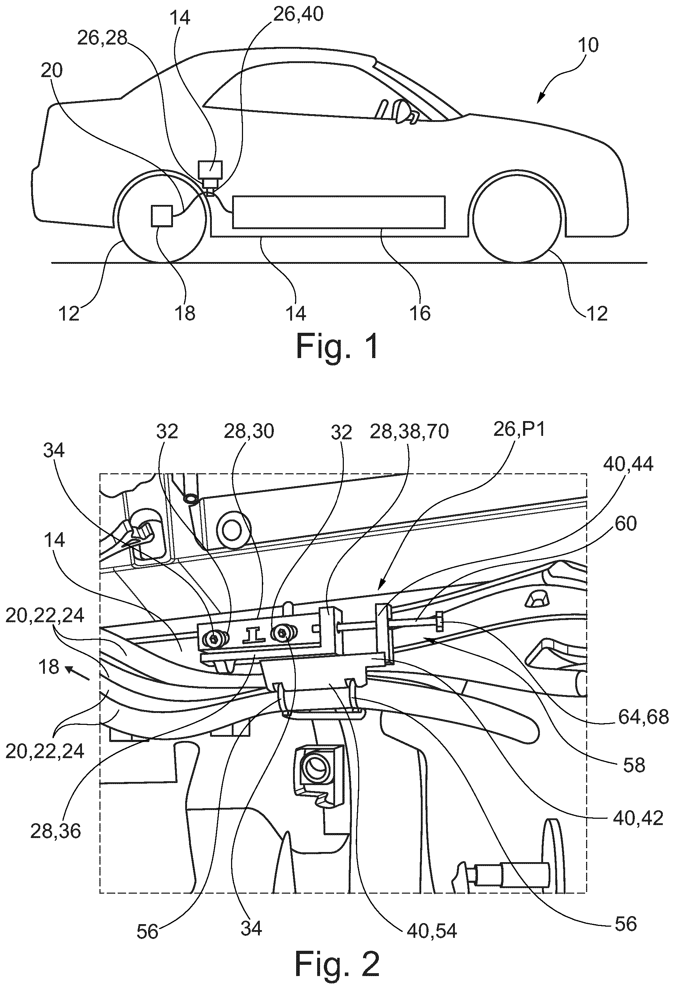

Figure 1 shows a vehicle 10.

The vehicle 10 comprises four road wheels 12 that are movably attached to a body 14, i.e. a structure, of the vehicle 10 by means of a chassis or a suspension system. It is noted that only two road wheels 12 of the vehicle 10 are shown for reasons of the side view illustrated in Figure 1, in which two further road wheels 12 are hidden behind the two road wheels 12 that are shown. Also, the chassis or suspension system of the road wheels 12 is not shown for reasons of ease of representation.

The vehicle 10 further comprises a traction battery 16 that is mounted to the body 14 of the vehicle 10.

Moreover, the vehicle 10 comprises an electric motor 18 that is coupled to a rear road wheel 12 of the vehicle 10 in order to drive that rear road wheel 12.

A high-voltage cable 20 is guided from the traction battery 16 to the electric motor 18 in order to power the electric motor 18 by electric power supplied by the traction battery 16. It is understood that usually an inverter unit is electrically interposed between the electric motor 18 and the traction battery 16. In the examples shown in the Figures, the inverter unit may be understood as forming part of the traction battery 16.

As has been mentioned before, the vehicle 10, and, thus, also the high-voltage cable 20, may be subject to vibrations during operation of the vehicle 10. Thus, it is necessary to reliably fix the high-voltage cable 20 to the vehicle body 14, to the chassis, to the suspension system or to any other part of the vehicle. Moreover, high-voltage cable 20 need to be positioned in a precise manner in order to allow for electromagnetic compatibility. Altogether, the high-voltage cable 20 needs to follow a precisely defined path within the vehicle 10.

To this end, the high-voltage cable 20 is attached to the body 14 of the vehicle 10 using a cable holder 26.

The cable holder 26 comprises a base part 28 that is fixed to the body 14 of the vehicle 10, i.e. a vehicle structure, via a fixing interface 30 of the base part 28 (see Figure 2). The fixing interface 30 of the base part 28 comprises two holes 32. A bolt 34 is screwed through each of the two holes 32 of the fixing interface 28 of the base part 28 of the cable holder 26 in order to fix the base part 28 to the body 14 of the vehicle 10.

The base part 28 of the cable holder 26 further comprises a plate-shaped portion 36 and a wall portion 38 extending perpendicular to the plate-shaped portion 36.

The cable holder 26 further comprises a sled 40.

Also the sled 40 comprises a plate-shaped portion 42 and a wall portion 44 extending perpendicular to the plate-shaped portion 42.

The plate-shaped portion 42 of the sled 40 is coupled to the plate-shaped portion 36 of the base part 28 by means of a first guide 46 and a second guide 48. The sled 40 may be moved relative to the base part 28 along the first guide 46 and along the second guide 48 between a first relative position P1 and a second relative position P2. In the present example, the first guide 46 and the second guide 48 are linear guides that extended in parallel to one another. Thus, the sled 40 is translatorily movable relative to the base part 28 along a linear axis. It is understood that a number of guides may be increased or decreased depending on an amount of force to be withstood and/or on a number of cables or hoses to be attached to the sled 40.

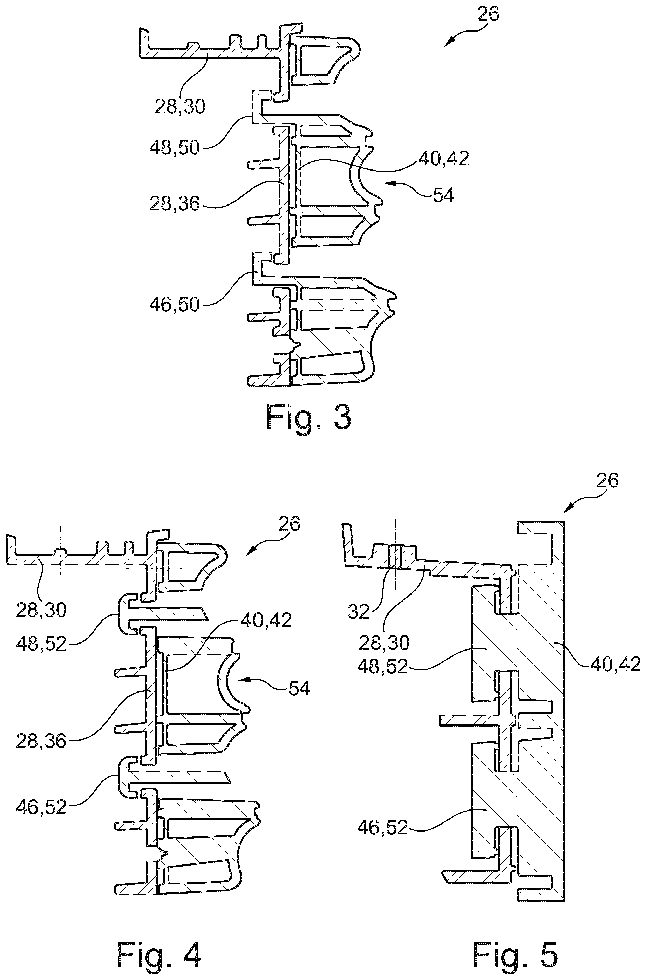

Figures 3 and 4 show examples of the first guide 46 and of the second guide 48 that couple the sled 40 to the base part 28. In the example shown in Figure 3, the first guide 46 and the second guide 48 comprise an L-shaped element 50 extending from the plate-shaped portion 42 of the sled 40. In Figure 4, the first guide 46 and the second guide 48 comprise a T-shaped element 52 extending from the plate-shaped portion 42 of the sled 40.

Figure 5 shows a further example of a guide coupling the sled 40 to the base part 28. The guide comprises two T-shaped elements 52 extending from the plate-shaped portion 42 of the sled 40.

Coming back to Figure 2, the sled 40 further comprises an attachment interface 54. Four high-voltage cables 20 may be attached to the attachment interface 54 of the sled 40 by means of cable ties 56. Each of the four high-voltage cables 20 is secured to the attachment interface 54 of the sled 40 by two cable ties 56 that are guided through holes in the attachment interface and around the respective high-voltage cable 20. It is noted that the high-voltage cables 20 may be secured to the attachment interface 54 of the sled 40 by any number of cable ties 56 depending on the amount of force to be withstood and/or on the number of cables or hoses to be attached to the sled 40.

The cable holder 26 further comprises an actuation mechanism 58 coupling the wall portion 44 of the sled 40 with the wall portion 38 of the base part 28.

In the examples shown in the Figures, the actuation mechanism 58 comprises a threaded rod 60 that is screwed into a threaded bushing 62. The threaded bushing 62 is pressed into a hole in the wall portion 38 of the base part 28 and comprises a thread at its inner surface.

The threaded rod 60 comprises a head 64 at an end of the threaded rod 60. Thus, the threaded rod 60 may also be designated a threaded bolt.

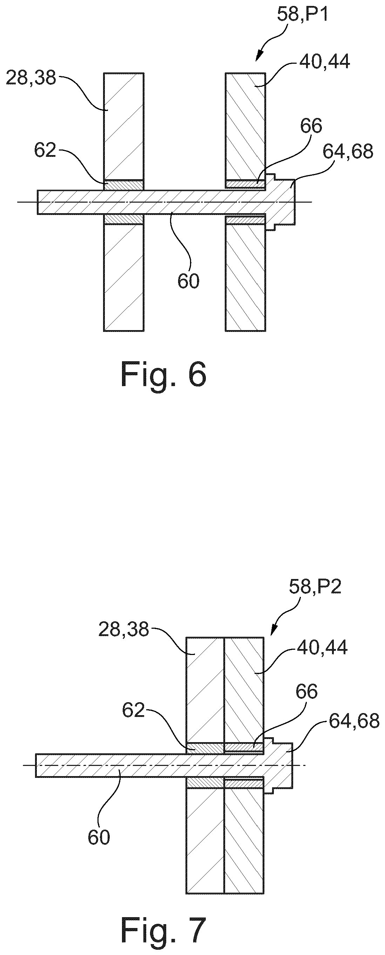

Schematics of a first example of the actuation mechanism 58 are shown in Figures 6 and 7.

The threaded rod 60 reaches through a non-threaded bushing 66 pressed into a hole in the wall portion 44 of the sled 40 so that the wall portion 44 of the sled 40 is arranged between the wall portion 38 of the base part 28 and the head 64 of the threaded rod 60. Thus, in the first relative position P1 of the sled 40 and the base part 28, which is shown in the schematic in Figure 6, the position of the sled 40 is constrained by the head 64 of the threaded rod 60 and by the wall portion 38 of the base part 28. In other words, the head 64 of the threaded rod 60 serves as a first abutment mechanism 68 that prevents the wall portion 44 of the sled 40 to move further away from the wall portion 38 of the base part 28 than a position of the head 64 of the threaded rod 60. The wall portion 38 of the base part 28 serves as a second abutment mechanism 70 for the sled 40 such that the wall portion 44 of the sled 40 may not move further towards the base part 28 than a position of the wall portion 38 of the base part 28. Further in other words, the sled 40 may move freely between the head 64 of the threaded rod 60 and the wall portion 38 of the base part 28 in the schematic provided in Figure 6, which shows the first example of the actuation mechanism 58 in the first relative position P1.

In the schematic in Figure 7, which illustrates the second relative position P2, it is shown that the threaded rod 60 has been screwed further into the threaded bushing 62 that is pressed into the wall portion 38 of the base part 28 compared to the first relative position P1. In this configuration, the wall portion 44 of the sled 40 is clamped between the wall portion 38 of the base part 28 and the head 64 of the threaded rod 60. In other words, it may be said that the sled 40 has been moved translatorily from the first relative position P1 in Figure 6 to the second relative position P2 in Figure 7 by tightening the threaded rod 60, i.e. by further screwing the threaded rod 60 into the threaded bushing 62 pressed into the wall portion 38 of the base part 28.

In order to tighten the threaded rod 60, the head 64 of the threaded rod 60 comprises a hexagonal shape such that it can be tightened by means of a wrench, in particular by means of a pneumatic wrench 72. It is understood that the head 64 of the threaded rod 60 may also comprise a rectangular shape or any other shape such that it can be tightened by means of a wrench, which may also be an electric, a hydraulic or a manual wrench.

It is noted that when the threaded rod 60 is tightened, only the movement of the sled 40 from the first relative position P1 to the second relative position P2, i.e. in one direction, is actively actuated. When the threaded rod 60 is loosened again, the sled 40 does not necessarily move back from the second relative position P2 into the first relative position P1. However, the sled 40 may do so because of elastic energy stored in the stiff high-voltage cables 20 attached to the sled 40, which tends to straighten the high-voltage cables 20 as soon as the constraint provided by the head 64 of the threaded rod 60 is relaxed.

It is further noted that the non-threaded bushing 66 that is pressed into the hole in the wall portion 44 of the sled 40 functions as a spacer element between the threaded bushing 62 pressed into the hole in the wall portion 38 of the base part 28 and the head 64 of the threaded rod 60.

Moreover, it is noted that a height of the threaded bushing 62 that is pressed into the hole in the wall portion 38 of the base part 28 is equal to a thickness of the wall portion 38 of the base part 28.

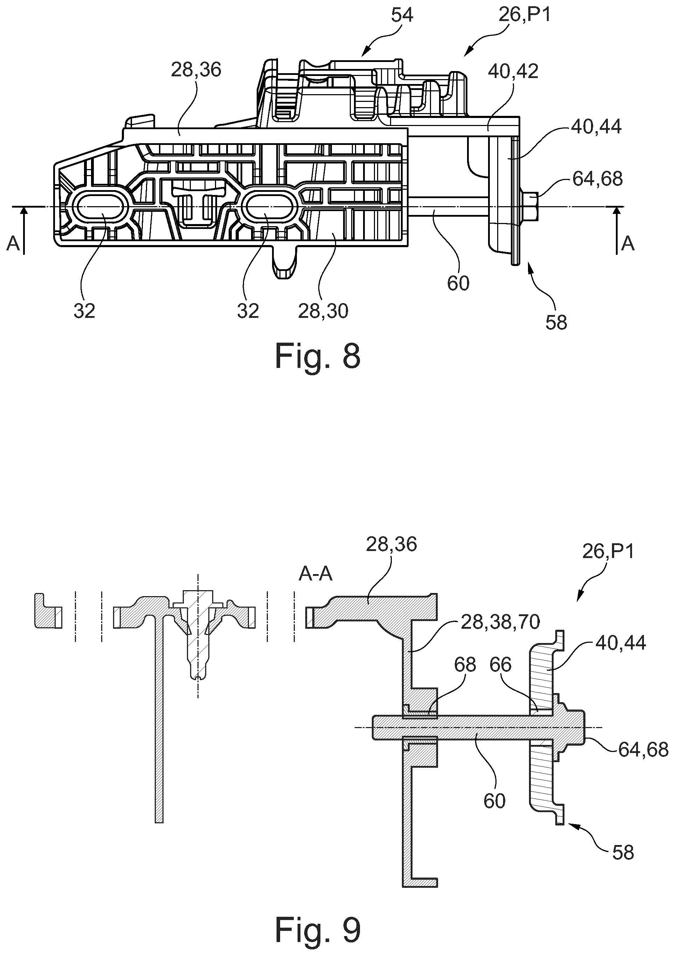

Figures 8 to 16 show the schematics of the actuation mechanism 58 as schematically provided in Figures 6 and 7. A repetition of features already explained with respect to Figures 6 and 7 will be omitted at this point for the sake of brevity. However, it is highlighted that the actuation mechanism 58 shown in Figures 6 and 7 does not comprise a feature that secures the sled 40 in the second relative position P2 to the base part 28. It is important to secure the sled 40 relative to the base part 28 in the second relative position P2 after assembly of the vehicle 10 because of vibrations that may occur while driving the vehicle 10. These vibrations may loosen the threaded rod 60 that is screwed into the threaded bushing 62 provided in the wall portion 38 of the base part 28.

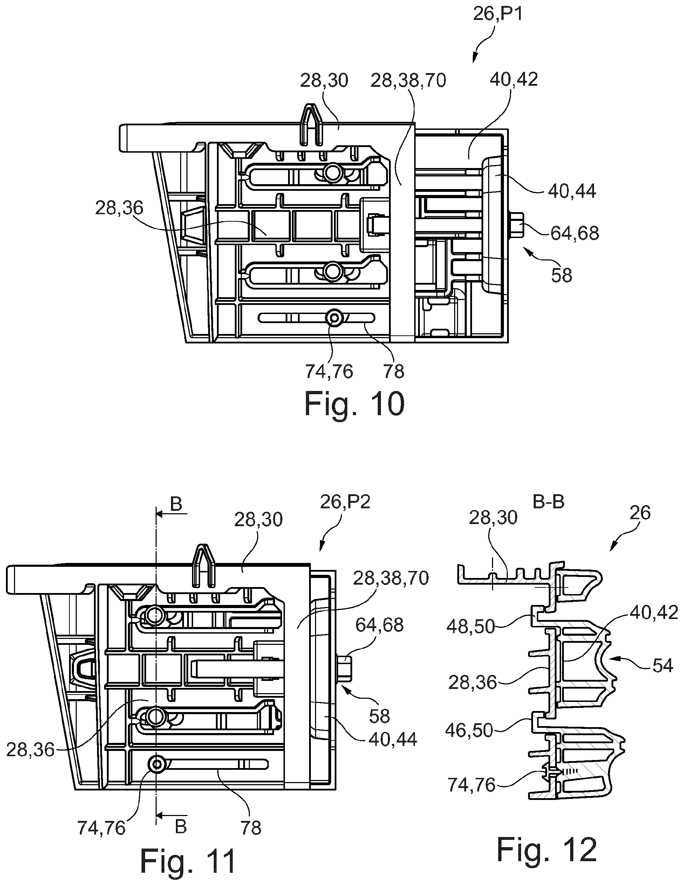

For this purpose, particularly Figures 10 to 16 show impeding elements 74 that prevent the sled 40 from unintentionally moving back towards the first relative position P1. The invention is claimed to regulate forces by providing a provision as described in the following three examples of the impeding element 74. The impeding element 74 is used to regulate forces at different positions between the base part 28 and the sled 40.

Figures 10 to 12 show a first example of such an impeding element 74. The first example of the impeding element 74 comprises a screw 76 that reaches through an oblong hole 78 in the plate-shaped portion 36 of the base part 28 and that is screwed into the plate-shaped portion 42 of the sled 40. The screw 76 may be suitable for fastening plastic components. The screw 76 requires a significantly lower torque to tighten than the threaded rod 60. By tightening the screw 76, a head of the screw 76 exercises a compression force onto an area surrounding the oblong hole 78. Due to this, a frictional force is created between the head of the screw 76 and the base part 28 that inhibits the sled 40 from moving relative to the base part 28. Thus, the sled 40 may be reliably secured in the second relative position P2 (see Figures 11), i.e. in a position in which the four high-voltage cables 20 attached to the attachment interface 54 of the sled 40 are forced into a desired position and/or shape, by tightening the screw 76. It is noted that the second relative position P2 may be any desired position of the sled 40 relative to the base part 28. At the second relative position P2, assembly forces may be determined, e.g. measured.

In general, it may be said that in the above-explained first example of the impeding element 74, the impeding element 74 is separate from the actuation mechanism 58.

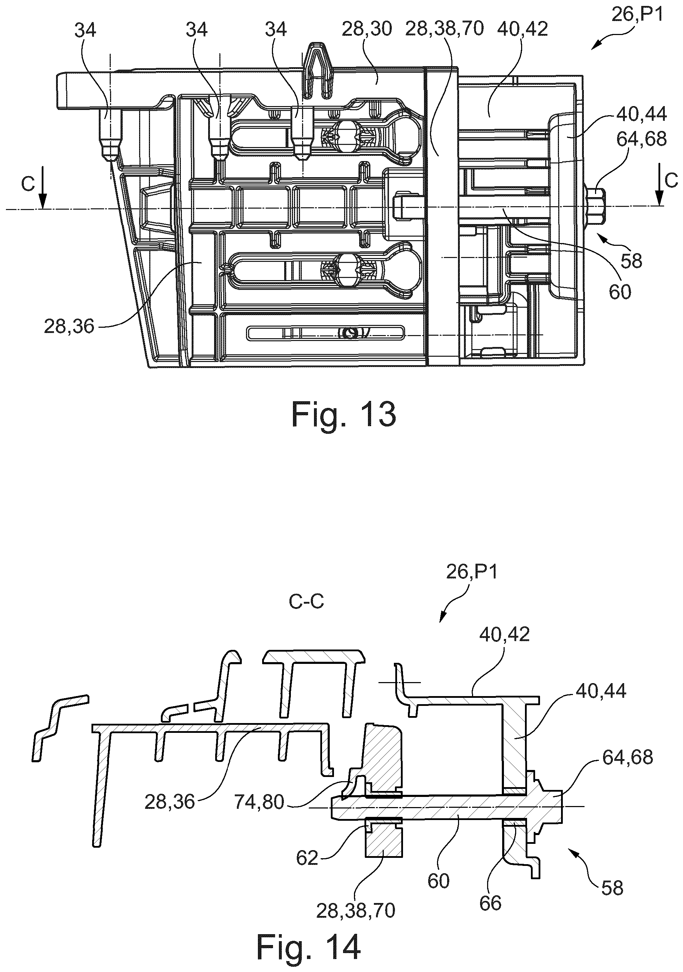

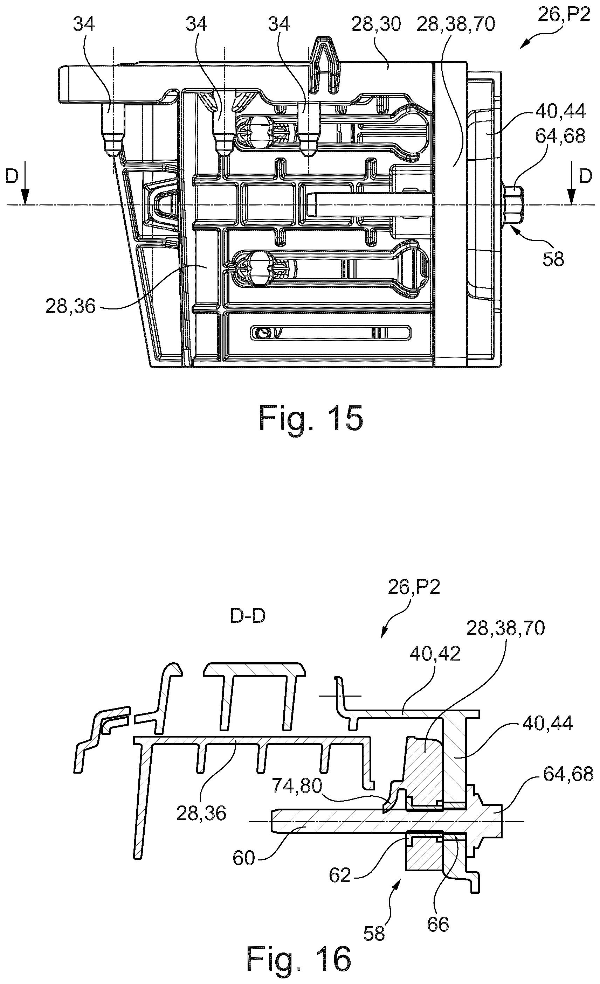

Figures 13 to 16 show a second example of an impeding element 74. The second example of the impeding element 74 comprises the tongue 80 that extends from the wall portion 38 of the base part 28 towards the threaded rod 60. In fact, the tongue 80 contacts the thread of the threaded rod 60. Thereby, friction is created between the threaded rod 60 and the tongue 80 that prevents the threaded rod 60 from rotating if no directed torque is deliberately applied to the head 64 of the threaded rod 60. In particular, the threaded rod 60 is prevented from rotating, in particular from loosening, due to vibrations that may occur while the vehicle 10 is driving. In other words, the sled is prevented from unwantedly moving from the second relative position P2 (Figures 15 and 16) back into the first relative position P1 (Figures 13 and 14).

In general, it may be said that in the above-explained second example of the impending element 74, the impeding element 74 forms part of the actuation mechanism 58 because the tongue 80 extending from the wall portion 38 of the base part 28 touches the threaded rod 60 of the actuation mechanism 58 in a frictional manner.

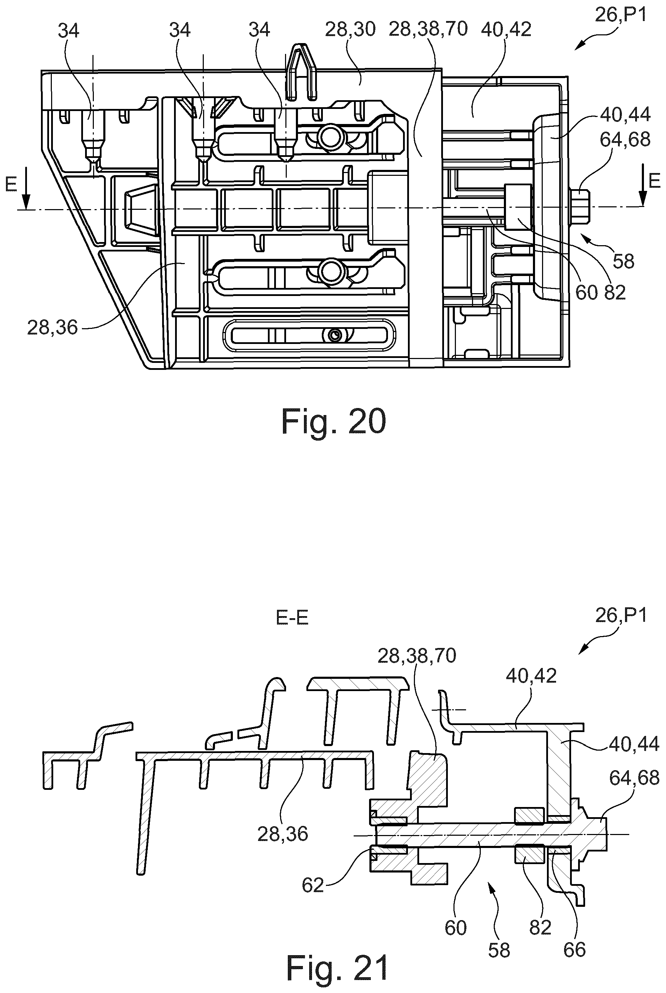

In a third example of the impeding element 74 shown in Figures 20 to 23, which is conceivable additionally or alternatively to the first example and/or to the second example of the impeding element 74, the impeding element 74 may comprise the threaded bushing 62 that is pressed into the hole in the wall portion 38 of the base part 28. In the third example of the impeding element 74, the threaded bushing 62 comprises a plastic ring at its inner surface that is adjacent to the thread at the inner surface of the threaded bushing 62. Such a threaded bushing 62 may also be called a self-locking threaded bushing 62. Thus, friction may be created between the threaded rod 60 and the plastic ring that prevents the threaded rod 60 from rotating if no directed to a torque is deliberately applied to the head 64 of the threaded rod 60. It is understood that instead of the plastic ring, the self-locking threaded bushing 62 may also comprise any other feature acting as a locking mechanism.

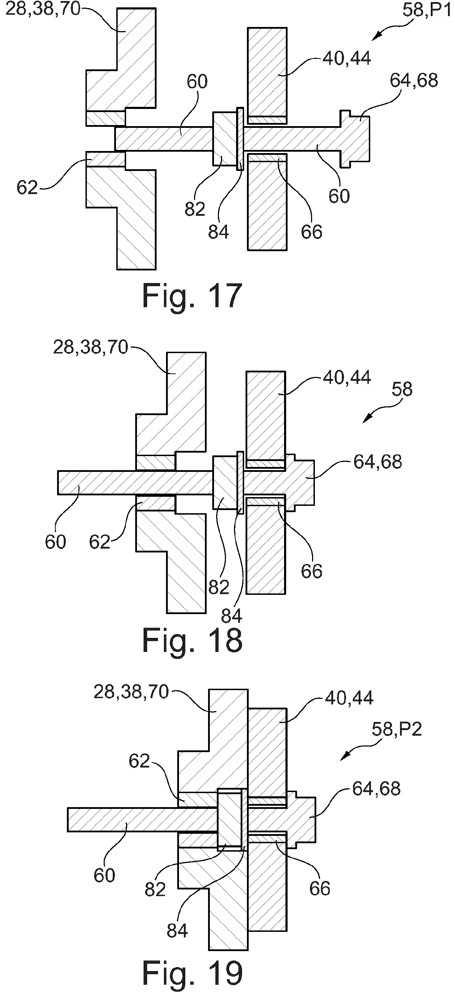

Schematics of a second example of the actuation mechanism 58 are shown in Figures 17 to 19. Only the differences with respect to the first example of the actuation mechanism 58 will be explained in the following.

A self-securing nut 82 is screwed onto the threaded rod 60 of the actuation mechanism 58. It is noted that also a locking nut, i.e. an assembly of two nuts locked by an application of opposing torques to each other, may be used instead of the self-securing nut 82. The wall portion 44 of the sled 40 is arranged between the head 64 of the threaded rod 60 and the self-securing nut 82. Moreover, a washer 84 is provided on the threaded rod 60 between the self-securing nut 82 and the wall portion 44 of the sled 40. Together with the non-threaded bushing 66 pressed into the hole in the wall portion 44 of the sled 40, the washer 84 prevents that the head 64 of the threaded rod 60 locks with the self-securing nut 82 when tightening the threaded rod 60.

The hole in the wall portion 38 of the base part 28 into which the threaded bushing 62 is pressed comprises a larger depth than in the first example of the actuation mechanism 58. In other words, the height of the threaded bushing 62 that is pushed into the hole in the wall 38 portion of the base part 28 is inferior to a depth of the hole in the wall portion 38 of the base part 28. Moreover, at least a portion of the hole in the wall portion 38 of the base part 28 comprises a diameter that is larger than a diameter of the self-securing nut 82. Said portion of the hole in the wall portion 38 of the base part 28 is at least as deep as a height of the self-securing nut 82. Thus, the self-securing nut 82 may be accommodated in the hole in the wall portion 38 of the base part 28 besides the threaded bushing 62.

Figure 17 shows the sled 40 in the first relative position P1 in which it is freely movable between the washer 84 and the head 64 of the threaded rod 60.

In Figure 18, which shows an intermediate position of the sled 40 relative to the base part 28, the threaded rod 60 is screwed further into the threaded bushing 62 pressed into the hole in the wall portion 38 of the base part 28 than in the first relative position P1. Also, the self-securing nut 82 is screwed further towards the head 64 of the threaded rod 60 than in the first relative position P1. However, it is to be noted that there is still a gap between the washer 84 and the non-threaded bushing 66 pressed into the hole of the wall portion 44 of the sled 40, thereby leaving a small play for the sled 40 along a longitudinal axis of the threaded rod 60.

In Figure 19, the second relative position P2 of the sled 40 relative to the base part 28 is shown. The threaded rod 60 has been screwed even further into the threaded bushing 62 pressed into the hole in the wall portion 38 of the base part 28 than in the first relative position P1 and in the intermediate position. However, it is to be noted that a gap between the head 64 of the threaded rod 60 and the non-threaded bushing 66 pressed into the hole in the wall portion 44 of the sled 40 is removed such that the small play for the sled 40 along the longitudinal axis of the threaded rod 60 is removed and a movement of the sled 40 relative to the base part 28 is locked. The self-securing nut 82 secures the sled 40 to the base part 28 so that the sled does not get loosened. Thus, the purpose of the self-securing nut 82 is similar to the purpose of the tongue 80.

It is noted that the second example of the actuation mechanism 58 may be combined with any of the first example, the second example and/or the third example of the impeding element 74. In terms of impeding elements 74, the tongue 80 is preferably combined with the screw 76.

Figures 20 to 23 show a combination of the second example of the actuation mechanism 58 and the third example of the impeding element 74.

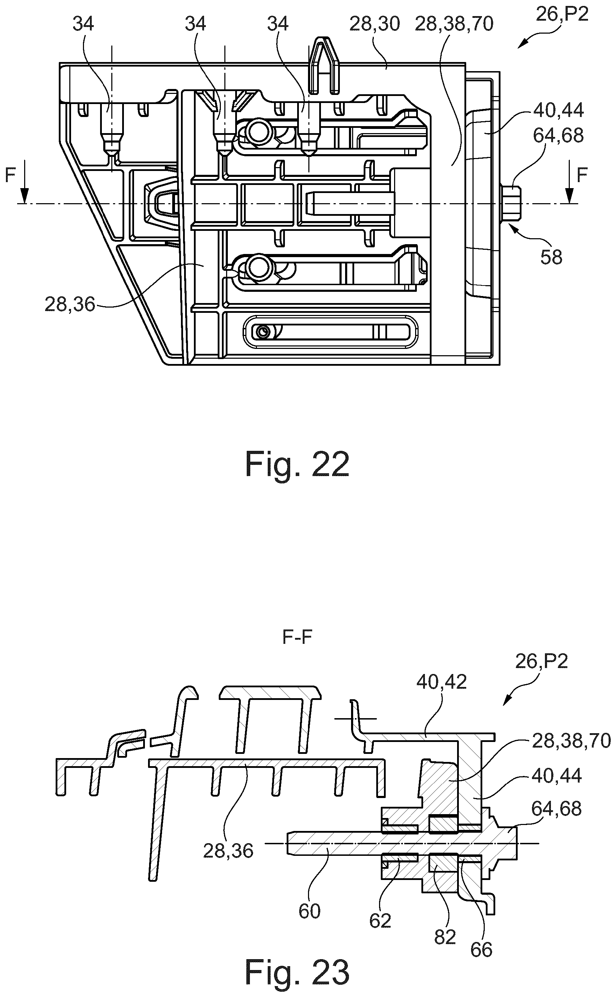

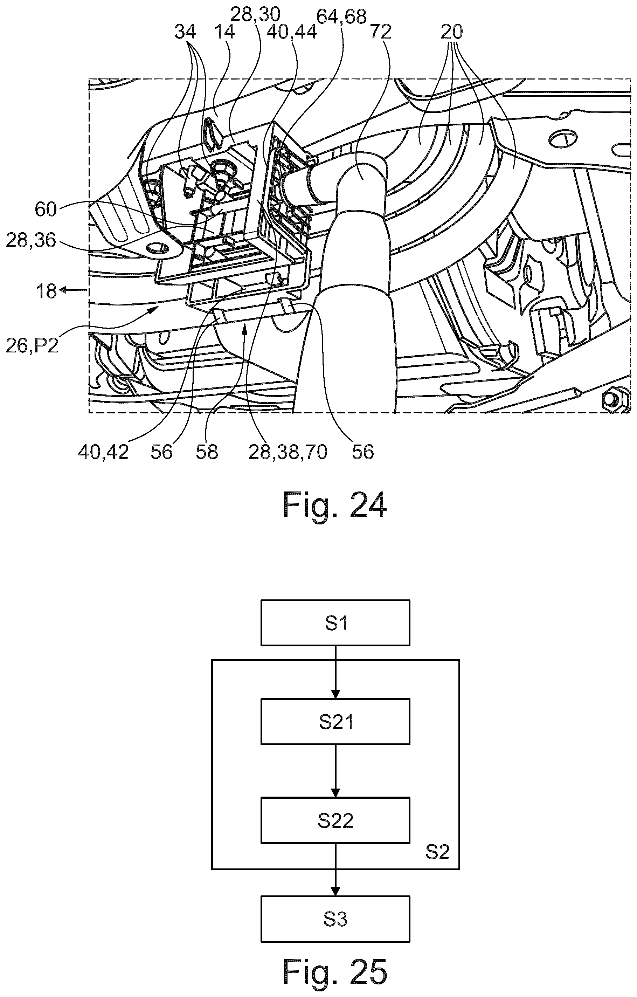

In Figures 20 and 21, the sled 40 is in the first relative position P1 to the base part 28. In Figures 22 and 23, the sled 40 is in the second relative position P2 to the base part 28. The translatory movement of the sled 40 relative to the base part 28 has been achieved by screwing the threaded rod 60 further into the threaded bushing 62 that is pressed into the hole in the wall portion 38 of the base part 28. As shown in Figure 24, this may be accomplished by applying a pneumatic torque wrench 72 to the head 64 of the threaded rod 60. Instead, an electric, hydraulic or manual torque wrench could be used.

Figure 25 shows steps of a method for attaching at least one high-voltage cable 20 to a vehicle structure using a cable holder 26.

As a step S1, the method comprises attaching the base part 28 of the cable holder 26 to the vehicle structure, e.g. to a body 14 of the vehicle 10, by means of its fixing interface 30. Step S1 further comprises attaching the at least one high-voltage cable 20 to the attachment interface 54 of the sled 40. This is done while the sled 40 is in the first relative position P1 to the base part 28. In other words, this is done while the wall portion 44 of the sled 40 and the wall portion 38 of the base part 28 are arranged at a distance from each other.

As a step S2, the method comprises moving the sled 40 in a translatory movement relative to the base part 28 into the second relative position P2. In other words, the wall portion 44 of the sled 40 may be moved towards the wall portion 38 of the base part 28 such that the wall portions 44, 38 abut against each other.

As a sub step S21, step S2 comprises actuating the translatory movement of the sled 40 relative to the base part 28 by means of a tool. The tool may for example comprise a pneumatic torque wrench 72 that is applied to the head 64 of the threaded rod 60 of the actuation mechanism 58 in order to screw the threaded rod 60 further into the threaded bushing 62 that is pressed into the hole in the wall portion 38 of the base part 28. Alternatively, the torque wrench may be an electric, a hydraulic or a manual torque wrench.

As a consequence thereof, and as a sub step S22 of step S2, a force may be regulated in the at least one high-voltage cable 26 in step S2 of the method when moving the sled 40 from the first relative position P1 into the second relative position P2. The second relative position P2 may be any position of the sled 40 relative to the base part 28. This is because the at least one high-voltage cable 26 is fixedly attached to the sled 40 of the cable holder 26. Thus, there is no relative movement between the at least one high-voltage cable 26 and the sled 40 while the sled 40 is being moved relative to the base part 28. Therefore, the at least one high-voltage cable 26 may be forced into a desired shape and/or position between the cable holder 26 and the electric motor 18 to which the at least one high-voltage cable 26 is connected. In other words, the at least one high-voltage cable 26 may be compressed or tensioned such that it assumes the desired position and/or shape.

In a step S3 of the method, once the sled 40 has reached the second relative position P2, a further movement of the sled 40 relative to the base part 28 is impeded by an impeding element 74. In the first example, the impeding element 74 may comprise the screw 76 that is screwed into the sled 40 and that creates friction between the head of the screw 76 and the base part 28 when trying to move the sled 40 relative to the base part 28. In the second example, the impeding element 74 may comprise the tongue 80 that protrudes from the wall portion 38 of the base part 28 and that frictionally interacts with the threaded rod 60. In the third example, the impeding element 74 may comprise the self-locking threaded bushing 62 that frictionally interacts with the threaded rod 60. All examples of the impeding element 74 may be combined with each other and may be combined with the first example of the actuation mechanism 58 and with the second example of the actuation mechanism 58. In any combination, the impeding element 74 prevents the sled 40 from unintentionally moving from the second relative position P2 back into the first relative position P1.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: road wheel
- 14: body
- 16: traction battery
- 18: electric motor
- 20: high-voltage cable
- 26: cable holder
- 28: base part
- 30: fixing interface
- 32: hole of fixing interface
- 34: bolt through hole of fixing interface
- 36: plate-shaped portion of base part
- 38: wall portion of base part
- 40: sled
- 42: plate-shaped portion of sled
- 44: wall portion of sled
- 46: first guide
- 48: second guide
- 50: L-shaped element
- 52: T-shaped element
- 54: attachment interface
- 56: cable tie
- 58: actuation mechanism
- 60: threaded rod
- 62: threaded bushing
- 64: head of threaded rod
- 66: non-threaded bushing
- 68: first abutment mechanism
- 70: second abutment mechanism
- 72: pneumatic wrench
- 74: impeding element
- 76: screw
- 78: oblong hole
- 80: tongue
- 82: self-securing nut
- 84: washer

- P1: first relative position
- P2: second relative position

## Claims

1. A cable holder (26) for attaching at least one high-voltage cable (20) to a vehicle structure, the cable holder (26) comprising a base part (28) fixable to the vehicle structure, and a sled (40) comprising an attachment interface (54) for attaching the at least one high-voltage cable (26),
wherein the base part (28) and the sled (40) are movably coupled via a first guide (46) such that the sled (40) and the base part (28) are translatorily movable relative to one another.

2. The cable holder (26) according to claim 1, wherein the base part (28) comprises a plate-shaped portion (36), wherein the sled (40) comprises a plate-shaped portion (42), and wherein the first guide (46) movably couples the plate-shaped portion (36) of the base part (28) and the plate-shaped portion (42) of the sled (40).

3. The cable holder (26) according to claim 1 or 2, further comprising an actuation mechanism (58) for actuating the translatory movement of the base part (28) and the sled (40) relative to one another.

4. The cable holder (26) according to claim 3, wherein the actuation mechanism (58) comprises a threaded rod (60) coupled to at least one of the sled (40) or the base part (28) via a threaded hole such that the translatory movement is actuatable by rotating the threaded rod (60).

5. The cable holder (26) according to claim 3 or 4, wherein the actuation mechanism (58) is configured to actuate a translatory movement in one direction only or wherein the actuation mechanism (58) is configured to actuate a translatory movement in two opposite directions.

6. The cable holder (26) according to any one of claims 3 to 5, wherein the actuation mechanism (58) comprises an actuation interface for operating the actuation mechanism (58) by means of a tool.

7. The cable holder (26) according to claim 2 and any one of claims 3 to 6, wherein a wall portion (38) extends from the plate-shaped portion (36) of the base part (28), wherein a wall portion (44) extends from the plate-shaped portion (42) of the sled (40), and wherein the actuation mechanism (58) couples the wall portion (38) of the base part (28) and the wall portion (44) of the sled (40).

8. The cable holder (26) according to any one of the preceding claims, further comprising an impeding element (74) configured to impede a movement of the sled (40) and the base part (28) relative to one another.

9. The cable holder (26) of claim 8 and any one of claims 3 to 7, wherein the impeding element (74) forms part of the actuation mechanism (58) or wherein the impeding element (74) is separate from the actuation mechanism (58).

10. The cable holder (26) according to any one of the preceding claims, wherein the base part (28) and the sled (40) are movably coupled via a second guide (48) such that the sled (40) and the base part (28) are translatorily movable relative to one another, wherein the first guide (46) and the second guide (48) extend in parallel.

11. The cable holder (26) according to any one of the preceding claims, further comprising a first abutment mechanism (68) for abutting the sled (40) against the base part (28) in a first relative position (P1) and/or further comprising a second abutment mechanism (70) for abutting the sled (40) against the base part (28) in a second relative position (P2).

12. A method for attaching at least one high-voltage cable (20) to a vehicle structure using a cable holder (26) according to any one of the preceding claims, the method comprising:
- attaching the base part (28) to the vehicle structure and attaching the high-voltage cable (20) to the attachment interface (54) of the sled (40) while the sled (40) and the base part (28) are in a first relative position (P1) (S1), and
- subsequently moving the sled (40) and the base part (28) into a second relative position (P2) (S2).

13. The method according to claim 12, further comprising regulating a force within the high-voltage cable (20) when moving the sled (40) and the base part (28) from the first relative position (P1) into the second relative position (P2) (S22).

14. The method according to claim 12 or 13, further comprising impeding a further movement of the sled (40) relative to the base part (28) once the sled (40) is in the second relative position (P2) (S3).

15. The method according to any one of claims 12 to 14, further comprising actuating the movement of the sled (40) and the base part (28) in the second relative position (P2) by means of a tool (S21).
